(19) Europäisches Patentamt
European Patent Office
Office européen des brevets

(11) Publication number: **0 010 967**
**B1**

(12) **EUROPEAN PATENT SPECIFICATION**

(45) Date of publication of patent specification: **20.01.82**

(51) Int. Cl.³: **C 08 G 18/32** //C08K5/18

(21) Application number: **79302410.0**

(22) Date of filing: **01.11.79**

(54) **Compositions useful for curing polyurethane prepolymers, a process for their preparation and curable compositions prepared from them.**

(30) Priority: **02.11.78 US 957226**

(43) Date of publication of application:
**14.05.80 Bulletin 80/10**

(45) Publication of the grant of the European patent:
**20.01.82 Bulletin 82/3**

(84) Designated Contracting States:
**BE DE FR GB IT NL SE**

(56) References cited:
**DE - A1 - 2 601 373**
**US - A - 3 755 261**
**US - A - 3 891 606**

(73) Proprietor: **E.I. DU PONT DE NEMOURS AND COMPANY**
**Legal Department 1007 Market Street**
**Wilmington, Delaware 19898 (US)**

(72) Inventor: **Caruso, Paul Philip**
**5121 New Kent Road**
**Wilmington Delaware 19808 (US)**

(74) Representative: **Wardrope, Alexander James Brownlie et al,**
**Frank B. Dehn & Co. Imperial House 15-19 Kingsway**
**London WC2B 6UZ (GB)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Compositions useful for curing polyurethane prepolymers, a process for their preparation and curable compositions prepared from them

This invention relates to compositions useful for curing polyurethane prepolymers, to a process for preparing such curing compositions, and to curable compositions made by mixing such curing compositions with isocyanato-terminated prepolymers.

It is known that compositions useful in curing isocyanato-terminated polyurethane prepolymers can be made by dispersing particles of a complex of 4,4′-methylenedianiline (MDA) with a salt in an inert organic liquid. However, such prior art compositions have the drawback that their mixtures with polyurethane prepolymers have poor shelf life, as indicated by their tendency to undergo an undue increase in viscosity during storage. There is a need in the art for a curing composition which forms mixtures with prepolymers having good shelf life at room temperature and slightly above, and having the ability to cure rapidly at an elevated temperature to form well-cured polyurethane products.

U.S. Patent 4,075,150 to Hoeschele addresses the same problem. The drawback of that invention, however, is poor hydrolytic stability of polyurethanes prepared by that process.

## SUMMARY OF THE INVENTION

The present invention provides a process for preparing a composition which is useful for curing a polyurethane prepolymer, said process comprising

(1) forming a mixture of
a substantially inert organic liquid, (A), with particles, (B), of a complex of 3 moles of 4,4′-methylenedianiline and 1 mole of a salt selected from the group: sodium chloride, sodium bromide, sodium iodide, lithium chloride, lithium bromide and lithium iodide, said particles having an average diameter of less than 60 microns;
the weight proportion of liquid (A) in the mixture being about 20—90%, and that of particles (B) being about 10—80%, said mixture having a free methylenedianiline content of about 0.1—5% by weight;
(2) adding to said mixture with agitation at least 0.5 equivalent of an organic isocyanate per equivalent of the free methylenedianiline,
(3) while continuing agitation, allowing said organic isocyanate to react with said methylenedianiline; and
(4) adding at least 0.5 weight % of lecithin.

The invention also provides a composition useful for curing a polyurethane prepolymer, which comprises a substantially inert organic liquid, (A), and dispersed in component (A), particles, (B), of a complex of 4,4′-methylenedianiline and a salt, selected from the group: sodium chloride, sodium bromide, sodium iodide, lithium chloride, lithium bromide and lithium iodide; the composition being obtained by adding with good agitation an organic isocyanate to a dispersion of (B) in (A) which has a free methylenedianiline content of about 0.1—5% by weight; while continuing agitation, allowing said organic isocyanate to react with said methylenedianiline, the amount of organic isocyanate added being at least 0.5 equivalent per equivalent of free methylenedianiline originally present in said mixture; and adding at least 0.5 weight% of lecithin.

Also provided by the invention is a heat-curable composition useful for preparing cured polyurethane products, which comprises
(I) the above curing composition and
(II) an isocyanato-terminated prepolymer, the ratio of components (I) and (II) being such that the heat-curable composition contains about 0.7—1.2 equivalents of amine groups per equivalent of NCO groups.

The curing compositions of this invention preferably contain the substantially inert organic liquid (A) in an amount equal to about 25—60%, based on the combined weight of components (A) and (B). These compositions can be referred to as curing agent compositions, or simply as curing agents.

Component (A) is "substantially inert" in the sense that it will not cause undesirable dissociation of component (B) and will not undergo undesirable reactions with the isocyanato groups of the polyurethane prepolymer at the temperatures encountered in preparing and using the composition.

Preferably, component (A) is a free-flowing, high-boiling liquid which is readily miscible with the polyurethane prepolymer to be cured and compatible enough with the cured polyurethane obtained, so that there will be substantially no exudation of the liquid from the product. It is usually preferred to use a liquid having a boiling point above 200°C. Many of the liquids known in the plastic art as plasticizers can be used as component (A) of the present composition. For example, many of the plasticizers listed in the following publication can be used: Modern Plastics Encyclopedia, 1975—1976, pp. 692—702, McGraw-Hill Publishers. Especially preferred are di(2-ethylhexyl)phthalate, tetraethylene glycol bis(2-ethylhexanoate), tri(isopropylphenyl) phosphate and blends thereof. Also useful are other liquids selected from the following types: (1) esters of polycarboxylic acids and monohydric alcohols or phenols, (2) esters of polyols and monocarboxylic acids, (3) low molecular weight linear polyesters prepared from diols and dicarboxylic acids and chain-terminated with monocarboxylic acids or monohydric alcohols, (4)

aromatic derivatives selected from biphenyl, terphenyl and diphenyl ether and their halogenated derivatives, (5) chlorinated paraffins having a chlorine content of about 35—65% by weight and a specific gravity of about 1.1—1.5 at 25°C, (6) triesters of phosphoric acid, and (7) aromatic hydrocarbon oils derived from petroleum and having a molecular analysis by the clay-gel method of ASTM D-2007 of about 50—100% by weight aromatic hydrocarbons, about 0—35% by weight saturated hydrocarbons and about 0—30% by weight polar compounds, and blends of two or more such liquids.

It is known in the art that the above type (1) liquids can be prepared by esterification of an acid such as phthalic, isophthalic, mellitic, adipic, azelaic, sebacic, maleic or fumaric with an alcohol such as butyl, isobutyl, 2-ethylhexyl, cyclohexyl or isodecyl or with a phenolic compound such as o-cresol or phenol. The type (2) liquids can be prepared by esterifying a polyol such as glycerol, diethylene glycol, tri- or tetraethylene glycol, pentaerythritol or dipropylene glycol with an acid such as acetic, 2-ethylhexanoic, caproic, pelargonic or benzoic. The type (3) liquids are polyesters of low molecular weight (e.g., below 2000). Examples of the type (6) liquids are triphenyl phosphate, tricresyl phosphate, tri-n-butyl phosphate, tri(2-ethylhexyl) phosphate, octyldiphenyl phosphate and tri(isopropylphenyl) phosphate.

The preferred proportion of component (B) particles of a complex of 4,4'-methylenedianiline with a salt is about 40—75%, based on the combined weight of components (A) and (B). The salt portion of the complex is preferably sodium chloride. The particles of complex preferably have an average diameter of less than 11 microns. The average diameter of the particles can be determined by means of a photomicrograph in a known manner.

In preparing the present composition, one forms a mixture of the liquid component (A) and the particles of component (B). The resulting mixture, as used in this invention, contains about 0.1—5%, preferably about 0.4—3%, of free methylenedianiline (MDA) based on the weight of the mixture. The concentration of free MDA is largely a function of the purity of the complex and the particular inert liquid used to prepare the dispersion. Regardless of the purity of the complex and the choice of the inert liquid, the resulting mixtures have always been found to contain some free MDA.

A preferred method for preparing the mixture of inert liquid (A) and complex particles (B) is that taught by Kalil in U.S. Patent 3,899,438. This method comprises carrying out the complex-forming reaction between 4,4'-methylenedianiline and the salt in the presence of an inert organic liquid of the type described above plus at least 0.5 part of water per 100 parts of the salt, the amount of water present being insufficient to dissolve all the salt until the complex-forming reaction is at least 50% complete. For use in this invention, the water is removed from the resulting dispersion. Any suitable known method can be used, for example, by subjecting the dispersion to a vacuum at about 60—70°C. Dispersions formed by the Kalil method contain a small amount of 2,4'-MDA and 2,2'-MDA in addition to the 4,4'-MDA as the free diamines unless pure 4,4'-MDA is used as a starting material. The 2,4'-MDA and 2,2'-MDA cannot be separated economically from 4,4'-MDA, and commercial MDA normally contains about 2—3% of those impurities. The 2,4'-MDA and 2,2'-MDA are not capable of complex formation and remain in solution in the inert liquid along with the free 4,4'-MDA normally found in dispersions of the complex.

The mixture of components (A) and (B) can also be prepared by other methods known to be useful for making dispersions of the complex particles in an inert organic liquid. For example, one can use the method taught by Caruso and Verbanc in U.S. Patent 3,876,604, which comprises forming particles of the complex of MDA and a salt in a separate operation, then, combining said particles with a suitable inert organic liquid and agitating the resulting combination until a uniform dispersion of the particles in the liquid is obtained, using sufficient shearing or grinding means to insure that the complex particles have the desired small diameter. In this procedure, most of the 2,4'-MDA and 2,2'-MDA are separated out when the complex is prepared. The resulting dispersion still contains free 4,4'-MDA.

The dispersion preferably will also contain an oil-soluble surfactant in an amount equal to about 0.1—5.0% based on the total weight of the composition. Preferred surfactants include lecithin, polyoxypropylated quaternary ammonium halides and phosphated glycerides (e.g., "Emcol" D70-30C from Witco Chemical Corp.). These surfactants are preferably employed at a level of 0.5—2.0% based on the total weight of components (A) and (B).

The novel curing agent composition is made by adding to said dispersion at least 0.5 equivalent, usually 0.5—2.0 equivalents, preferably about 0.5—1.0 equivalent, of an organic isocyanate per equivalent of the free MDA present in the mixture and allowing the isocyanate to react with the MDA. During the addition and reaction of the isocyanate, efficient agitation is required. While the isocyanate can be added neat, it is preferred to add it as a solution in an inert liquid of the type described for component (A). Adding the isocyanate as a solution appears to assist in blending the isocyanate uniformly throughout the curing agent dispersion. During this step the temperature should be maintained at 50°C or below.

Following the addition and the reaction of the isocyanate, it is critical to add an oil-soluble surfactant to the dispersion. In the absence of this

surfactant, the curing agent, which is thixotropic, sets to a solid paste which is impractical to use. The added surfactant maintains the isocyanate-modified dispersion in a usable condition during storage. It is important to note that the presence of a surfactant prior to the addition of the isocyanate is ineffective in avoiding the formation of the solid paste. Lecithin has been found to give consistently good results in this application. The amount of lecithin added at this point, regardless of the amount present prior to isocyanate addition, should be at least 0.5 weight %. The amount of lecithin used is generally between 0.5 and 2.0%, preferably 0.7—1.7 weight%.

The organic isocyanate used in preparing the compositions of this invention may be an aliphatic, cycloaliphatic or aromatic mono- or polyisocyanate. Representative monoisocyanates include phenyl isocyanate, p-tolyl isocyanate, cyclohexyl isocyanate and butyl isocyanate. Representative polyisocyanates include tolylene-2,4-diisocyanate and its mixtures with tolylene-2,5-diisocyanate, 4,4′-methylenebis(phenyl isocyanate), 2,4,4′-triisocyanato-diphenyl ether, phenylene-1,4-diisocyanate, 4,4′-methylenebis(cyclohexyl isocyanate), 1,6-hexamethylene diisocyanate and 1,4-cyclohexylene diisocyanate. Because of their availability and the fact that they are liquid, tolylene-2,4-diisocyanate and its commercial mixtures with tolylene-2,6-diisocyanate are preferred.

In preparing the heat-curable compositions of the present invention, the curing agent composition and an isocyanato-terminated prepolymer are blended in proportions such that the resulting mixture contains about 0.7—1.2, preferably about 0.85—1.1, equivalents of amine groups per equivalent of —NCO groups. To illustrate the weight ratio of components one could use in typical applications, about 10—60 grams of curing agent composition can be mixed with 100 grams of isocyanato-terminated prepolymer when using a curing agent composition having a 50:50 weight ratio of inert organic liquid to particles of a complex of 3 moles of MDA and 1 mole of sodium chloride.

The prepolymer of this heat-curable composition is preferably the product of a reaction of a molar excess of an organic diisocyanate with a polyalkylene ether glycol or a polyester glycol having a molecular weight of about 300—3000 and optionally with a diol having a molecular weight of less than 250. Other known isocyanato-terminated prepolymers can also be used, as will be apparent to one skilled in polyurethane chemistry. In preparing the prepolymer, it is preferred to use about 1.2—4.0 moles (with particular preference for about 1.5—2.5 moles) of the diisocyanate for each mole of glycol plus diol used. Examples of useful organic diisocyanates are 2,4- and 2,6-tolylene diisocyanates, 4,4′-methylenebis(phenyl isocyanate), 4,4′-methylenebis(cyclohexyl isocyanate), hexamethylene diisocyanate and 1-isocyanato-2-isocyanatomethyl - 3,5,5 - trimethylcyclohexane. Part of the diisocyanate (e.g., about 1—25% by weight) can be replaced with a triisocyanate, for example, 2,4,4′-triisocyanatodiphenyl ether. Examples of useful materials with which the organic isocyanate can be reacted to form the prepolymer are a polyalkylene glycol (e.g., polyethylene ether glycol, polypropylene ether glycol or polytetramethylene ether glycol); a polyether made by copolymerizing a cyclic ether (e.g., ethylene oxide, propylene oxide, trimethylene oxide or tetrahydrofuran) with an aliphatic polyol (e.g., ethylene glycol, 1,3-butanediol, diethylene glycol, dipropylene glycol, 1,2-propylene glycol or 1,3-propylene glycol); a polyester glycol made by polymerizing a cyclic lactone (e.g., ε-caprolactone) in the presence of a diol, or by the condensation polymerization of a dicarboxylic acid (or its ester-forming equivalent) and a molar excess of a polyol; or a blend of two or more such materials. Examples of these and other materials which can be used to prepare the prepolymer will be apparent from such prior art as Hoeschele U.S. Patent 2,984,645, Columns 5 and 6, and the references listed by Caruso and Verbanc in U.S. Patent 3,876,604, Column 6, lines 46—48.

The composition can also contain one or more additives such as those known to be useful in curable polyurethane prepolymer compositions, for example coloring agents, fillers, solvents, stabilizers, anti-settling agents, and pore-forming agents.

The curing agent compositions of this invention can be prepared economically by a simple process and can be mixed with polyurethane prepolymers to form heat-curable compositions having good storage stability for reasonable periods at temperatures not over 50°C without showing an undue increase in viscosity but curing rapidly to high quality cured polyurethane products when heated (e.g., about 80—180°C). It is an important advantage that a curable composition of this type will retain a useful low viscosity for an extended period regardless of whether the mixture of components (A) and (B) used to form the curing agent composition is prepared by the procedure of U.S. Patent 3,899,438 or that of U.S. Patent 3,876,604.

The following examples illustrate the invention; all amounts are by weight unless otherwise indicated. All Brookfield viscosity values are obtained by using an RVT model viscometer of Brookfield Engineering Laboratories, Stoughton, Massachusetts.

## Example 1

A dispersion of a 4,4′-methylenedianiline/sodium chloride complex is prepared by: (1) forming a mixture of 225 g of di(2-ethylhexyl) phthalate, 19.5 g of sodium chloride, 64

g of water, 1.48 g of lecithin and 7.52 g of a polyoxypropylated quaternary ammonium chloride which is believed to have the formula

$$[CH_3N(C_2H_5)_2([C_3H_6O]_{40}H)]^+Cl^-$$

sold as "Emcol" CC42 by Witco Chemical Corp.; (2) while the resulting mixture is agitated under moderate to high shear conditions, adding 198 g of flaked 4,4'-methylenedianiline; (3) continuing the mixing of the composition for one hour while maintaining its temperature at 58—60°C by regulating the shear input by means of a variable voltage transformer; and (4) removing the water from the resulting dispersion of complex particles in the organic liquid by distillation in an agitated flask at 60°C under subatmospheric pressure. The resulting composition is a typical prior art curing agent dispersion.

The particles of the dispersion obtained in step (4) are particles of a complex of 3 moles of MDA with 1 mole of sodium chloride. These particles are found to have an average diameter of less than 11 microns when examined in a customary manner by means of a photomicrograph. There is no need for further operations to reduce the size of the particles since they are already fine enough for most applications.

The dispersion obtained in step (4) has a free MDA content of 2.25%, as determined by separating the complex particles from the liquid phase by high-speed centrifugation (15,000 rpm) and then analyzing the clear liquid for MDA content by potentiometric titration with 0.1 N 2,4-dinitrobenzenesulfonic acid in acetic acid.

A curing composition representative of this invention is prepared by performing the following additional steps: (5) adding 2.3 parts of an 80/20 mixture of 2,4-/2,6-tolylene diisocyanate as a 15% solution in di(2-ethylhexyl) phthalate per 100 parts of the dispersion of step (4) with agitation at 26°C and holding for1 hour with agitation, and (6) adding 1.0 part of lecithin per 102.3 parts of the dispersion of step (5) with agitation at 26°C.

The dispersion obtained in step (6) has a total amino nitrogen content of 6.1% and a Brookfield viscosity (50 rpm, No. 5 spindle, at 25°C) of 4.2 Pa·s.

The use of the curing composition of this invention in preparing a curable polyurethane is illustrated in Example 2 and compared to the use of the prior art curing composition of step (4).

## Example 2

A prepolymer is prepared by reacting 1.68 moles (292 g) of an 80/20 mixture of 2,4/2,6-tolylene diisocyanate with a mixture of 0.57 mole (570 g) of polytetramethylene ether glycol (PTMEG) having a number average molecular weight of 1000 and 0.43 mole (903 g) of PTMEG having a number average molecular weight of 2100 for 3 hours at 80°C. The resulting prepolymer has an NCO content of 3.25% and a Brookfield viscosity of 28 Pa·s at 30°C.

A curable polyurethane composition is prepared by mixing 681 g of the above prepolymer with 123 g of the curing agent dispersion obtained in step (6) of Example 1. The mixture of prepolymer and dispersion is maintained at 40°C or below during mixing. The resulting composition, which is heat-curable, has a Brookfield viscosity of 16.6 Pa·s at 39°C (No. 5 spindle, 2.5 rpm). The curable mixture is cooled to 25°C and held for 4 hours, at which time the viscosity at 25°C is 39.2 Pa·s. After 28 hours, the viscosity increases very slightly to 40.0 Pa·s. A sample of the curable polyurethane composition is heated to 175°C for 5 minutes to form a resilient cured elastomer having a Shore A hardness of 82.

The long term storage stability of this composition is excellent. After storage for 243 days at about 25°C, the composition has a Brookfield viscosity of 17.8 Pa·s at 40°C (No. 6 spindle, 50 rpm).

For control purposes, a curable polyurethane composition is prepared from the prior art dispersion of step (4) in Example 1. A mixture of 120 g of the prior art dispersion and 681 g of the prepolymer of this example is prepared at 40°C. The curable mixture is cooled to 25°C and held for 4 hours, at which time its Brookfield viscosity is 80.6 Pa·s (No. 5 spindle, 2.5 rpm). This is slightly more than double the viscosity observed for the curable composition of this invention. This viscosity is sufficiently high to complicate or prevent use of the mixture in ordinary fluid rubber casting and molding operations.

## Example 3

A composition which is useful for curing polyurethane prepolymers is prepared by: (1) providing a quantity of particles of a complex of 3 moles of MDA and 1 mole of sodium chloride, made by a known process (see the teaching of Caruso & Verbanc in U.S. Patent No. 3,876,604, Column 2, line 55 to Column 3, line 35); (2) ball-milling 50 parts of the complex particles of step (1) with 50 parts of di(2-ethylhexyl) phthalate and 1 part of lecithin at 30°C in an intermittent type attritor (from Union Process, Inc., Akron, Ohio) provided with water cooling for five hours; (3) adding 1.4 parts of an 80/20 mixture of 2,4-/2,6-tolylene diisocyanate alone, or as a 15% solution in di(2-ethylhexyl) phthalate per 100 parts of the dispersion of step (2) with agitation at 26°C for 1 hour; and (4) adding 1.0 part of lecithin per 101.4 parts of the dispersion of step (3) with agitation at 26°C.

The complex particles of the resulting composition have an average diameter of less than 20 microns. The intermediate composition obtained in step (2) has a free MDA content of 0.5% and an amino nitrogen content of 6.3%. The curing composition obtained in step (2) is representative of the prior art.

A curable polyurethane composition is prepared by mixing 681 g of the prepolymer prepared in Example 2 with 123 g of the curing agent of this example. The mixture of prepolymer and the dispersion is maintained at 40°C during mixing then cooled to about 25°C and held for 4 hours, at which time the Brookfield viscosity is 31.2 Pa·s (No. 5 spindle, 2.5 rpm).

A sample of the curable polyurethane composition is heated to 175°C for 5 min and yields a cured polyurethane elastomer having a Shore A hardness of 85.

When the prior art curing dispersion of step (2) of this example (120 g) is mixed at 40°C with 681 g of the prepolymer of Example 2, a curable polyurethane composition is obtained which after 4 hours storage at 25°C has a Brookfield viscosity of about 80 Pa·s (No. 5 spindle, 2.5 rpm).

Example 4

A curable polyurethane composition is prepared by mixing 190 g of the curing agent dispersion from step (6) of Example 1 with 550 g of a polyurethane prepolymer prepared by reacting 348 parts of tolylene-2,4-diisocyanate with 1000 parts of PTMEG having a number average molecular weight of 1000 for 3 hours at 80°C. The prepolymer is heated to 40°C before mixing with the curing agent dispersion. Once the curable polyurethane composition has been prepared, it is cooled to 25°C and stored at 25°C. Viscosities are determined following storage for the periods shown in the following table.

| Time, after mixing | Brookfield viscosity at 25°C Pa·s (Spindle No., rpm) | |
|---|---|---|
| 1 hour | 13.8 | (5; 2.5) |
| 24 hours | 14.4 | (5; 2.5) |
| 30 days | 13.0 | (5; 2.5) |
| 6 months | 11.3 | (5; 20) |

It is seen that even after 6 months storage, the curable polyurethane composition is still sufficiently fluid for use in casting applications. Following storage, the composition can be cured to a tough elastomer having a Shore D hardness of about 50 by heating to 130°C for 60 minutes.

**Claims**

1. A process for preparing a composition useful for curing an isocyanato-terminated polyurethane prepolymer, said process comprising

(1) forming a mixture of
a substantially inert organic liquid, (A), with particles, (B), of a complex of 3 moles of 4,4′-methylenedianiline and 1 mole of a salt selected from the group: sodium chloride, sodium bromide, sodium iodide, lithium chloride, lithium bromide and lithium iodide, said particles having an average diameter of less than 60 microns;
the weight proportion of liquid (A) in the mixture being about 20—90%, and that of particles (B) being about 10—80%, said mixture having a free methylenedianiline content of about 0.1—5% by weight;

(2) adding to said mixture with agitation at least 0.5 equivalent of an organic isocyanate per equivalent of the free methylenedianiline,

(3) while continuing agitation, allowing said organic isocyanate to react with said methylenedianiline; and

(4) adding at least 0.5 weight % of lecithin.

2. The process of Claim 1 wherein the proportion of the substantially inert liquid is 25—60% based on the combined weight of (A) and (B).

3. The process of Claim 2 wherein the inert liquid has a boiling point above 200°C.

4. The process of Claim 1 wherein the proportion of free methylenedianiline, prior to the addition of isocyanate is 0.4—3 weight percent.

5. The process of Claim 1 wherein the proportion of lecithin added in step (4) is 0.5—2 weight percent.

6. A composition suitable for curing isocyanato-terminated polyurethane prepolymers, said composition comprising a substantially inert organic liquid, (A) and dispersed in component (A), particles, (B), of a complex of 3 moles of 4,4′-methylenedianiline and 1 mole of a salt selected from the group: sodium chloride, sodium bromide, sodium iodide, lithium chloride, lithium bromide and lithium iodide; substantially no free methylenedianiline being present in said composition, free methylenedianiline having been removed by

(1) adding to the initial dispersion of particles (B) in the liquid (A) with agitation about 0.5 to 2.0 equivalents of an organic isocyanate per equivalent of the initially present free methylenedianiline;

(2) while continuing agitation, allowing said organic isocyanate to react with said methylenedianiline; and

(3) adding at least 0.5 weight percent of lecithin.

7. The composition of claim 6 wherein the proportion of free methylenedianiline prior to the addition of the isocyanate is 0.3—4 weight percent.

8. The composition of claim 6 wherein the proportion of lecithin added in step (3) is 0.7—1.7 weight percent.

9. The composition of claim 6 wherein the added isocyanate is tolylene diisocyanate.

10. A curable composition containing a

composition of Claim 6 and an isocyanato-terminated polyurethane prepolymer in such proportions that the heat-curable composition contains about 0.7—1.2 equivalents of amine groups per equivalent of NCO groups.

**Revendications**

1. Procédé de préparation d'une composition utile pour durcir un prépolymère polyuréthane à groupes terminaux isocyanato, caractérisé en ce qu'il comprend les étapes selon lesquelles:

(1) on forme un mélange d'un liquide organique sensiblement inerte, (A), avec des particules, (B), d'un complexe de 3 moles de 4,4'-méthylène-dianiline et de 1 mole d'un sel choisi parmi le chlorure de sodium, le bromure de sodium, l'iodure de sodium, le chlorure de lithium, le bromure de lithium et l'iodure de lithium, ces particules ayant un diamètre moyen de moins de 60 microns; la proportion en poids de liquide (A) dans le mélange étant d'environ 20—90% et celle des particules (B) étant d'environ 10—80%, ce mélange ayant une teneur en méthylènedianiline libre d'environ 0,1—5% en poids;

(2) ou ajoute à ce mélange, en agitant, 0,5—2.0 équivalents d'un isocyanate organique par équivalent de la méthylènedianiline libre,

(3) tout en continuant l'agitation, on laisse l'isocyanate organique réagir avec la méthylènedianiline; et

(4) on ajoute au moins 0,5% en poids de lécithine.

2. Procédé selon la revendication 1, caractérisé en ce que la proportion du liquide sensiblement inerte est de 25—60% par rapport au poids combiné de (A) et de (B).

3. Procédé selon la revendication 2, caractérisé en ce que le liquide inerte a un point d'ébullition au-dessus de 200°C.

4. Procédé selon la revendication 1, caractérisé en ce que la proportion de méthylènedianiline libre, avant l'addition d'isocyanate, est de 0,4—3% en poids.

5. Procédé selon la revendication 1, caractérisé en ce que la proportion de lécithine ajoutée dans l'étape (4) est de 0,5—2% en poids.

6. Composition utilisable pour durcir des prépolymères polyuréthanes à groupes terminaux isocyanato, cette composition comprenant un liquide organique sensiblement inerte, (A), et, dispersées dans le constituant (A), des particules, (B), d'un complexe de 3 moles de 4,4'-méthylénedianiline et de 1 mole d'un sel choisi parmi le chlorure de sodium, le bromure de sodium, l'iodure de sodium, le chlorure de lithium, le bromure de lithium et l'iodure de lithium; la composition ne contenant sensiblement pas de méthylènedianiline libre, la méthylènedianiline libre ayant été éliminée:

(1) en ajoutant à la dispersion initiale de particules (B) dans le liquide (A), avec agitation, environ 0,5 à 2,0 équivalents d'un isocyanate organique par équivalent de méthylènedianiline libre initialement présente;

(2) tout en continuant l'agitation, en laissant réagir l'isocyanate organique avec la méthylènedianiline; et

(3) en ajoutant au moins 0,5% en poids de lécithine.

7. Composition selon la revendication 6, caractérisé en ce que la proportion de méthylènedianiline libre avant l'addition de l'isocyanate est de 0,3 à 4% en poids.

8. Composition selon la revendication 6, caractérisé ence que la proportion de lécithine ajoutée dans l'étape (3) est de 0,7 à 1,7% en poids.

9. Composition selon la revendication 6, caractérisé en ce que l'isocyanate est du tolylène diisocyanate.

10. Composition durcissable contenant une composition selon la revendication 6 et un prépolymère polyuréthane à groupes terminaux isocyanato dans des proportions telles que la composition durcissable par la chaleur contienne environ 0,7—1,2 équivalent de groupe amine par équivalent de groupe NCO.

**Patentansprüche**

1. Verfahren zur Herstellung einer für die Vulkanisation eines endständige Isocyanat-Gruppen enthaltenden Polyurethan-Prepolymers vorteilhaft verwendbaren Zusammensetzung dadurch gekennzeichnet, daß man

(1) eine Mischungaus einer im wesentlichen inerten organischen Flüssigkeit (A) mit Teilchen (B) eines Komplexes aus 3 mol 4,4'-Methylendianilin und 1 mol eines Salzes, ausgewählt aus der Gruppe Natriumchlorid, Natriumbromid, Natriumiodid, Lithiumchlorid, Lithiumbromid und Lithiumiodid, wobei die Teilchen einen mittleren Durchmesser von weniger als 60 $\mu$m haben, herstellt, wobei der Gewichtsanteil der Flüssigkeit (A) in der Mischung etwa 20 bis 90% und derjenige der Teilchen (B) etwa 10 bis 80% beträgt und die Mischung einen Gehalt an freiem Methylendianilin von etwa 0,1 bis 5 Gewichts-% besitzt,

(2) zu der vorbezeichneten Mischung unter Rühren 0,5 bis 2,0 Äquivalente eines organischen Isocyanats pro Äquivalent des freien Methylendianilins hinzufügt,

(3) unter Fortsetzung des Rührens das organische Isocyanat mit dem Methylendianilin reagieren läßt und

(4) mindestens 0,5 Gewichts-% Lecithin hinzufügt.

2. Verfahren nach Anspruch 1, dadurch gekennzeichnet, daß der Anteil der im wesentlichen inerten organischen Flüssigkeit 25 bis

60%, bezogen auf das Gesamtgewicht von (A) und (B), beträgt.

3. Verfahren nach Anspruch 2, dadurch gekennzeichnet, daß die organische Flüssigkeit einen Siedepunkt oberhalb von 200°C besitzt.

4. Verfahren nach Anspruch 1, dadurch gekennzeichnet, daß der Anteil des freien Methylendianilins vor der Zugabe des Isocyanats 0,4 bis 3 Gewichts-% beträgt.

5. Verfahren nach Anspruch 1, dadurch gekennzeichnet, daß der Anteil des in Schritt (4) zugesetzten Lecithins 0,5 bis 2 Gewichts-% beträgt.

6. Zusammensetzung, die vorteilhaft für die Vulkanisation eines endständige Isocyanat-Gruppen enthaltenden Prepolymers verwendbar ist, enthaltend eine im wesentlichen inerte organische Flüssigkeit (A) und, dispergiert in dem Bestandteil (A), Teilchen (B) eines Komplexes aus 3 mol 4,4'-Methylendianilin und 1 mol eines Salzes, ausgewählt aus der Gruppe Natriumchlorid, Natriumbromid, Natriumiodid, Lithiumchlorid, Lithiumbromid und Lithiumiodid, wobei in der Mischung im wesentlichen kein freies Methylendianilin mehr anwesend ist, nachdem das freie Methylendianilin durch

(1) Zusatz von etwa 0,5 bis 2,0 Äquivalenten eines organischen Isocyanats pro Äquivalent des ursprünglich vorhandenen freien Methylendianilins unter Rühren zu der ursprünglichen Dispersion der Teilchen (B) in der Flüssigkeit (A),

(2) Reagierenlassen des organischen Isocyanats mit dem Methylendianilin unter fortgesetztem Rühren und

(3) Zusatz von mindestens 0,5 Gewichts-% Lecithin entfernt wurde.

7. Zusammensetzung nach Anspruch 6, dadurch gekennzeichnet, daß der Anteil des freien Methylendianilins vor der Zugabe des Isocyanats 0,3 bis 4 Gewichts-% beträgt.

8. Zusammensetzung nach Anspruch 6, dadurch gekennzeichnet, daß der Anteil des in Schritt (3) zugesetzten Lecithins 0,7 bis 1,7 Gewichts-% beträgt.

9. Zusammensetzung nach Anspruch 6, dadurch gekennzeichnet, daß das Isocyanat Tolylendiisocyanat ist.

10. Vulkanisierbare Masse, enthaltend die Zusammensetzung nach Anspruch 6 und ein Polyurethan-Prepolymer mit endständigen Isocyanat-Gruppen in solchen Anteilen, daß die heißvulkanisierbare Masse etwa 0,7 bis 1,2 Äquivalente Amin-Gruppen pro Äquivalent NCO-Gruppen enthält.